# EUROPÄISCHE PATENTANMELDUNG

(11) **EP 4 575 253 A1**
(43) Veröffentlichungstag der Anmeldung: **25.06.2025**
(21) Anmeldenummer: 24218893.6
(22) Anmeldetag: 10.12.2024
(51) Int. Cl.: F16C 41/00, B61F 15/26, G01P 3/44

(54) **IMPULSRING FÜR EINE ACHSLAGERANORDNUNG EINES SCHIENENFAHRZEUGES UND ENDKAPPEN-ANORDNUNG FÜR EINE ACHSLAGERANORDNUNG MIT EINEM IMPULSRING**

(30) Priorität: 22.12.2023 DE 102023213256
(71) Anmelder: Aktiebolaget SKF, 415 50 Göteborg (SE)
(72) Erfinder: Le Moigne, Thierry, 37230 Luynes (FR); Ribault, Patrice, 37210 Vouvray (FR); Champalou, François, 41150 Chaumont-sur-Loire (FR)
(74) Vertreter: Schonecke, Mitja

(57) **Zusammenfassung**

Es wird ein Impulsring (1) für eine Achslageranordnung eines Schienenfahrzeugs bereitgestellt, wobei der Impulsring (1) ausgebildet ist, lösbar an einer Endkappe (12) eines Achslagers befestigbar zu sein, und ein Profilmuster (2) umfasst, das ausgebildet ist, mit einem Sensor zusammenzuwirken, um eine Drehgeschwindigkeit der Endkappe (12) zu bestimmen und/oder die Anzahl der Umdrehungen der Endkappe (12) zu zählen.

## Beschreibung

### Technischer Bereich der Erfindung

Die vorliegende Erfindung betrifft einen Impulsring für eine Achslageranordnung eines Schienenfahrzeugs und eine Endkappenanordnung für eine Achslageranordnung mit einem solchen Impulsring.

### Hintergrund der Erfindung

Achslager werden bekanntlich an Schienenfahrzeugen wie Zügen, insbesondere an Lokomotiven, Reisezugwagen und Güterwagen, angebracht. Im Allgemeinen umfasst ein Schienenfahrzeug mehrere Drehgestelle. Jedes Drehgestell besteht aus einem Rahmen, zwei (oder mehr) Radsätzen und vier (oder mehr) Achslagern. Jeder Radsatz besteht aus einer Achse, die zwei Räder trägt. Das Achslager ist das Verbindungselement zwischen dem rotierenden Radsatz und dem quasistatischen Rahmen des Drehgestells. Das Achslager umfasst Halterungen für ein Gehäuse für versetzte Schraubenfedern und ein Gehäuse zur Aufnahme einer Lagereinheit.

Um die Geschwindigkeit eines Rades zu bestimmen, wird eines der rotierenden Bauteile, in der Regel eine Endkappe, die das Lager axial auf einem Zapfen fixiert, so bearbeitet, dass die Außenfläche der Endkappe mit einer Zahnstruktur versehen ist, die als Impulsrad oder Impulsring wirkt. Ein Abstand zwischen zwei Zähnen kann von einem Sensor erfasst werden, um die Drehgeschwindigkeit des Rades zu bestimmen und/oder die Anzahl der Umdrehungen zu zählen.

Da das Impulsrad und die Endkappe aus einem Stück gefertigt werden, ist die Herstellung der Endkappe recht teuer. Außerdem ist es notwendig, die Verzahnung an jeden Endkappentyp anzupassen.

Es ist daher Aufgabe der vorliegenden Erfindung, einen vielseitig einsetzbaren und kostengünstigen Impulsring für eine Achslageranordnung eines Schienenfahrzeugs bereitzustellen.

### Zusammenfassung der Erfindung

Diese Aufgabe wird gelöst durch einen Impulsring für eine Achslageranordnung eines Schienenfahrzeugs nach Anspruch 1 und eine Endkappenanordnung für eine Achslageranordnung eines Schienenfahrzeugs nach Anspruch 7.

Nachfolgend wird ein Impulsring für eine Achslageranordnung eines Schienenfahrzeugs bereitgestellt, wobei der Impulsring ausgebildet ist, lösbar an einer Endkappe eines Achslagers befestigbar zu sein, und ein Profilmuster aufweist, das ausgebildet ist, mit einem Sensor zusammenzuwirken, um eine Drehgeschwindigkeit der Endkappe zu bestimmen und/oder die Anzahl der Umdrehungen der Endkappe zu zählen. Vorzugsweise ist der Impulsring aus Metall gefertigt. Insbesondere kann der Impulsring aus einem ferritischen Metall hergestellt sein.

Der Impulsring ermöglicht es, den Impulsring getrennt von der Endkappe herzustellen und zu bearbeiten. Außerdem ist es möglich, den Impulsring aus einem kostengünstigen Material und/oder durch ein kostengünstiges Herstellungsverfahren zu formen. Ferner kann der Impulsring mit der Endkappe durch Einpressen, Verschrauben, Verschweißen, Verpressen, Verkleben oder dergleichen verbunden werden.

Vorzugsweise hat der Impulsring eine röhrenartige Form, und ein Teil einer Innenfläche des Impulsrings ist so gestaltet, dass er an der Endkappe befestigt werden kann. Der Impulsring kann zum Beispiel direkt aus einem Rohr hergestellt werden. Insbesondere kann ein Teil der Innenfläche des Rohrs so bearbeitet sein, dass der Impulsring an der Endkappe befestigt werden kann.

Alternativ kann der Impulsring auch aus einem Bandmaterial hergestellt sein, wobei ein erstes Ende des Bandes an einem zweiten Ende des Bandes befestigt ist, um eine röhrenartige Form zu bilden. Zum Beispiel kann das erste Ende mit dem zweiten Ende verschweißt, verschraubt, vernietet usw. werden.

Nach einer weiteren Ausführungsform wird das Profilmuster durch eine Vielzahl von Öffnungen gebildet. Insbesondere kann die Anzahl der Öffnungen durch den verwendeten Sensor festgelegt sein. Durch die Verwendung von Öffnungen oder Fenstern kann die Konstruktion des Impulsrades im Vergleich zu einem Zahnprofil vereinfacht werden.

Vorzugsweise sind die Öffnungen als Durchgangsöffnungen ausgebildet. Die Öffnungen können zum Beispiel eine rechteckige, runde und/oder ovale Form haben. Die Öffnungen können z. B. durch Laserschneiden, Stanzen und/oder jedes andere geeignete Verfahren hergestellt werden. Dies ermöglicht eine kostengünstigere Herstellung des Impulsrings.

Gemäß einem weiteren Aspekt wird eine Endkappenanordnung für eine Achslageranordnung eines Schienenfahrzeugs bereitgestellt, wobei die Endkappenanordnung eine Endkappe eines Achslagers und einen oben erwähnten Impulsring umfasst, wobei der Impulsring lösbar an der Endkappe befestigt ist.

Um eine vielseitig einsetzbare und kostengünstige Endkappe mit Impulsring für eine Achslageranordnung eines Schienenfahrzeugs bereitzustellen, wird der Impulsring separat von der Endkappe vorgesehen und lösbar an der Endkappe befestigt. Dies ermöglicht es auch, eine Geschwindigkeit eines Rades zu bestimmen und/oder die Anzahl der Umdrehungen des Rades auf wesentlich kostengünstigere Weise zu zählen, da die aufwändige Herstellung und/oder Bearbeitung der Endkappe entfallen kann.

Insbesondere ist die Konstruktion des Impulsrings einfacher im Vergleich zu einer Endkappe, die zusammen mit der Verzahnung des Impulsrings hergestellt wird. Außerdem kann die Endkappe kleiner und/oder mit weniger Material und damit kostengünstiger hergestellt werden. Außerdem ist es möglich, die Endkappe allein und/oder in anderen Anwendungen mit den gleichen oder ähnlichen Abmessungen des Zapfens zu verwenden.

Vorzugsweise hat die Endkappe eine zylindrische Außenfläche, wobei ein Teil der zylindrischen Außenfläche bearbeitet ist, um einen Sitz für den Impulsring zu bilden. Dies ermöglicht es, nur einen Teil der Außenfläche zu bearbeiten. Zum Beispiel kann ein Teil der zylindrischen Außenfläche mit einer Stufe versehen werden, die als Sitz für den Impulsring ausgebildet ist.

Weitere bevorzugte Ausführungsformen sind in den abhängigen Ansprüchen sowie in der Beschreibung und in den Figuren definiert. Dabei können Elemente, die in Kombination mit anderen Elementen beschrieben oder dargestellt sind, allein oder in Kombination mit anderen Elementen vorhanden sein, ohne dass der Schutzbereich verlassen wird.

### Kurze Beschreibung der Zeichnungen

Im Folgenden werden bevorzugte Ausführungsformen der Erfindung in Bezug auf die Zeichnungen beschrieben, wobei die Zeichnungen nur beispielhaft sind und den Schutzumfang nicht einschränken sollen. Der Schutzbereich wird ausschließlich durch die beigefügten Ansprüche definiert.

Die Zahlen zeigen:
Fig. 1: ein Impulsring gemäß einer ersten Ausführungsform,
Fig. 2: ein Schnitt durch den Impulsring aus Fig. 1 in größerer Ausführlichkeit, und
Fig. 3: eine Endkappenanordnung für eine Achslageranordnung gemäß einer zweiten Ausführungsform.

### Detaillierte Beschreibung der Erfindung

Im Folgenden werden gleiche oder ähnliche Funktionselemente mit den gleichen Bezugsziffern bezeichnet.

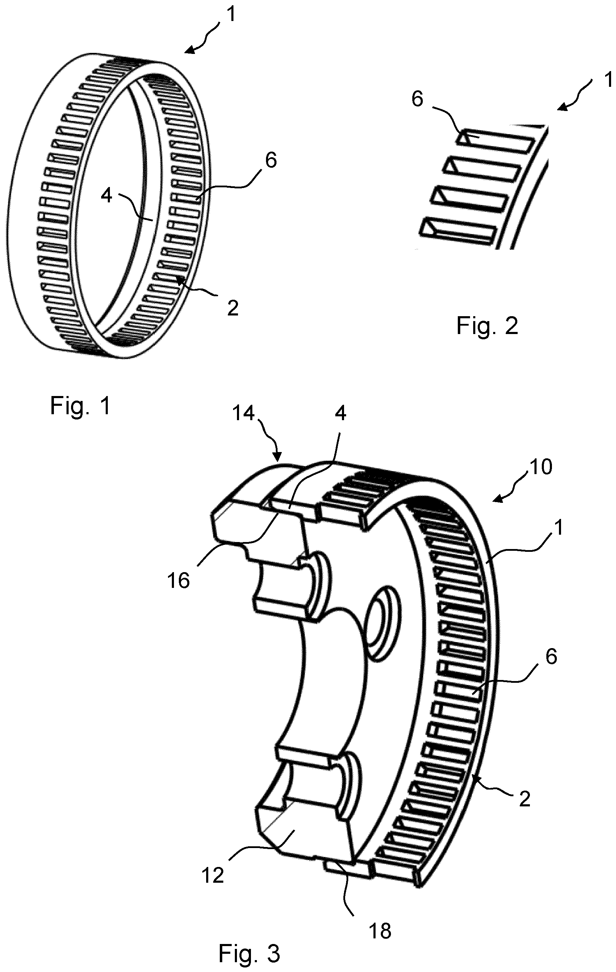

Fig. 1 und 2 zeigen einen Impulsring 1 für eine Achslageranordnung eines Schienenfahrzeugs. Der Impulsring 1 ist ausgebildet, lösbar an einer Endkappe 12 (Fig. 3) eines Achslagers befestigbar zu sein, und umfasst ein Profilmuster 2, das ausgebildet ist, mit einem Sensor (nicht dargestellt) zusammenzuwirken, um eine Drehgeschwindigkeit der Endkappe 12 zu bestimmen und/oder die Anzahl der Umdrehungen der Endkappe 12 zu zählen.

Der Impulsring 2 hat eine röhrenartige Form. Wie aus Fig. 1 ersichtlich ist, ist ein Teil 4 einer Innenfläche des Impulsrings 1 zur Befestigung an der Endkappe 12 ausgebildet. Insbesondere kann der Teil 4 so bearbeitet sein, dass der Impulsring an der Endkappe 12 befestigt werden kann. Zum Beispiel kann das Teil 4 so gestaltet sein, dass der Impulsring 1 auf die Endkappe 12 aufgepresst werden kann. Alternativ kann der Impulsring 1 auch durch Verschrauben, Verschweißen, Verpressen, Verkleben oder ähnliches an der Endkappe 12 befestigt werden.

Das Profilmuster 2 wird durch eine Vielzahl von Öffnungen 6 gebildet, wobei die Anzahl der Öffnungen 6 durch den verwendeten Sensor bestimmt sein können. In der ersten Ausführungsform sind die Öffnungen 6 als Durchgangsöffnungen mit einer rechteckigen Form ausgebildet. Alternativ können sich die Öffnungen 6 auch nur teilweise durch den Impulsring 1 erstrecken. Auch können die Öffnungen 6 eine andere Form als das dargestellte Rechteck haben. Beispielsweise können die Öffnungen 6 eine runde und/oder ovale Form haben. Die Öffnungen 6 können durch Laserschneiden, Stanzen und/oder jedes andere geeignete Verfahren hergestellt werden.

Fig. 3 zeigt eine Endkappenanordnung 10 für eine Achslageranordnung eines Schienenfahrzeugs. Die Endkappenanordnung 10 umfasst eine Endkappe 12 eines Achslagers und einen Impulsring 1, wobei der Impulsring 1 lösbar an der Endkappe 12 befestigt ist.

Die Endkappe 12 hat eine zylindrische Außenfläche 14, wobei ein Teil 16 der zylindrischen Außenfläche 14 bearbeitet ist, um einen Sitz für den Impulsring 1 zu bilden. Insbesondere weist die Außenfläche 14 eine Stufe 18 auf, die als Anschlag für den Impulsring 1 dient, wenn der Impulsring an der Endkappe 12 befestigt ist. So kann beispielsweise ein Teil der zylindrischen Außenfläche mit einer Stufe versehen sein, die als Sitz für den Impulsring ausgebildet ist.

Zusammenfassend ist der Impulsring 1 getrennt von der Endkappe 12 vorgesehen und lösbar an der Endkappe 12 befestigt. Dies hat den Vorteil, dass eine vielseitige und kostengünstige Endkappe 12 sowie ein Impulsring 1 für eine Achslageranordnung eines Schienenfahrzeugs bereitgestellt werden kann. Dies ermöglicht auch eine wesentlich kostengünstigere Bestimmung einer Geschwindigkeit eines Rades, da die aufwendige Herstellung und/oder Bearbeitung der Endkappe 12 entfallen kann. Insbesondere ist die Konstruktion des Impulsrings 1 im Vergleich zu einer Endkappe 12, die zusammen mit der Verzahnung des Impulsrings hergestellt wird, einfacher. Außerdem kann die Endkappe kleiner und/oder mit weniger Material und damit kostengünstiger hergestellt werden. Außerdem ist es möglich, die Endkappe allein und/oder in anderen Anwendungen mit den gleichen oder ähnlichen Abmessungen des Zapfens zu verwenden.

### Referenzzahlen

- 1: Impulsring
- 2: Profilmuster
- 4: Teil
- 6: Eröffnung
- 10: Endkappenmontage
- 12: Endkappe
- 14: Außenfläche
- 16: Prozent
- 18: Stufe

## Patentansprüche

1. Impulsring (1) für eine Achslageranordnung eines Schienenfahrzeugs, wobei der Impulsring (1) ausgebildet ist, lösbar an einer Endkappe (12) eines Achslagers befestigbar zu sein, und ein Profilmuster (2) umfasst, das so ausgebildet ist, mit einem Sensor zusammenzuwirken, um eine Drehgeschwindigkeit der Endkappe (12) zu bestimmen und/oder die Anzahl der Umdrehungen der Endkappe (12) zu zählen.

2. Impulsring (1) nach Anspruch 1, wobei der Impulsring (1) eine röhrenartige Form aufweist und wobei ein Teil (4) einer Innenfläche des Impulsrings (1) ausgebildet ist, an der Endkappe (12) befestigbar zu sein.

3. Impulsring (1) nach Anspruch 1 oder 2, wobei das Profilmuster (2) durch eine Mehrzahl von Öffnungen (6) gebildet ist.

4. Impulsring (1) nach Anspruch 3, wobei die Öffnungen (6) als Durchgangsöffnungen ausgebildet sind.

5. Impulsring (1) nach Anspruch 3 oder 4, wobei die Öffnungen (6) eine rechteckige, runde und/oder ovale Form aufweisen.

6. Impulsring (1) nach einem der vorhergehenden Ansprüche, wobei der Impulsring (1) aus einem Band hergestellt ist, wobei ein erstes Ende des Bands an einem zweiten Ende des Bands befestigt ist, um eine röhrenartige Form zu bilden.

7. Endkappenanordnung (10) für eine Achslageranordnung eines Schienenfahrzeugs, umfassend eine Endkappe (12) eines Achslagers und einen Impulsring (1) nach einem der vorhergehenden Ansprüche, wobei der Impulsring (1) lösbar an der Endkappe (12) befestigt ist.

8. Endkappenanordnung (10) nach Anspruch 7, wobei die Endkappe (12) eine zylindrische Außenfläche (14) aufweist, wobei ein Teil (16) der zylindrischen Außenfläche (14) bearbeitet ist, um einen Sitz für den Impulsring (1) zu bilden.

9. Endkappenanordnung (10) nach Anspruch 8, wobei der Abschnitt (16) der zylindrichen Außenfläche (14) mit einer Stufe (18) versehen ist, die als Sitz für den Impulsring (1) ausgebildet ist.

10. Endkappenanordnung (10) nach einem der Ansprüche 7 bis 9, wobei der Impulsring (1) auf die Endkappe (12) aufgepresst, geschweißt, geklebt, gecrimpt und/oder mit Befestigungsmitteln befestigt ist.
